# EUROPÄISCHE PATENTSCHRIFT

(11) **EP 0 570 694 B1**
(45) Veröffentlichungstag und Bekanntmachung des Hinweises auf die Patenterteilung: **04.10.1995**
(21) Anmeldenummer: 93105814.3
(22) Anmeldetag: 08.04.1993
(51) Int. Cl.: D06N 5/00, E04D 11/00

(54) **Wurzelfeste, bituminöse Dichtungsbahn**
Bituminous membrane resistant to plant roots
Membrane bitumineuse résistante au percement des racines

(30) Priorität: 20.05.1992 DE 4216622; 04.08.1992 DE 4225667
(43) Veröffentlichungstag der Anmeldung: 24.11.1993
(73) Patentinhaber: VEDAG GmbH, 60388 Frankfurt (DE)
(72) Erfinder: Scherp, Ernst, Dipl.-Ing., W-6454 Bruchköbel (DE); Schumacher, Wilfried, W-6052 Mühlheim (DE); Meinbreckse, Manfred, Dipl.-Ing., W-6382 Friedrichsdorf (DE)
(74) Vertreter: Berkenfeld, Helmut, Dipl.-Ing.

(56) Entgegenhaltungen:
- DE-A- 1 078 990
- DE-A- 2 840 599
- DE-A- 2 840 814
- DE-U- 9 214 596
- DATABASE WPI Derwent Publications Ltd., London, GB; AN 74-36072V & SU-A-393 390 (D.SURMELI)

## Beschreibung

Die Erfindung betrifft eine bituminöse Dichtungsbahn, die auch gegen aggressive Wurzeln beispielsweise von Erlen, Pappeln und Diesteln beständig ist und als Wurzelschutzschicht für bituminöse Bauwerksabdichtungen z.B. bei Gründächern verwendet werden kann.

Es ist bekannt, daß eine Bauwerksabdichtung aus bituminösen Dichtungsbahnen mit einer Einlage aus gewebten oder ungewebten Fasern nicht wurzelfest ist. Aus diesem Grunde werden bituminöse Dichtungsbahnen mit einer Einlage aus 0,1 bis 0,2 mm dicken Kupferbändern als Wurzelschutzbahn eingesetzt (Technische Information VEDA-FLOR-WS, VEDAG GmbH, 1990). Zur Verbesserung der Haftung zwischen Metall und Bitumen und zur Verbesserung der Dehnbarkeit sind die Kupferbänder geriffelt oder kalottiert (Bitumen und Asphalt, Taschenbuch, 5. Auflage, Bauverlag, S. 307/308).

Die Dichtungsbahn wird meist als Schweißbahn angeboten. Obwohl Kupferbänder in weicher Qualität verwendet werden, ist die Schweißbahn steif und kaum flexibel. Sie ist daher nur schwer glatt ohne Lufteinschlüsse zu verlegen.

Es bestand daher die Aufgabe, eine wurzelfeste, bituminöse Dichtungsbahn mit verbesserter Flexibilität zu entwickeln.

Die Aufgabe wird erfindungsgemäß durch eine Dichtungsbahn gelöst, die aus einem ein- oder beidseitig mit einer bituminösen Masse beschichteten, flächigen Fasergebilde besteht, wobei das Fasergebilde zumindest auf einer Oberfläche gleichmäßig mit 0,1 bis 100 g/m² Kupfer bedampft ist.

Da das aufgedampfte Kupfer die Flexibilität und Dehnung des Fasergebildes nicht beeinträchtigt, entspricht die erfindungsgemäße Bahn in ihren mechnischen Eigenschaften den üblichen Dichtungsbahnen. Als Fasergebilde können alle für bituminöse Bahnen üblichen Einlagen verwendet werden, wie beispielsweise Gewebe und Vliese aus Kunststoff- oder/und Glasfasern. Auch mehrlagige Fasergebilde gehören hierzu. Bevorzugt werden Fasergebilde mit einem Flächengewicht von 50 bis 300 g/m².

Aus der DE-A 28 40 599 ist eine selbstklebende Dichtungsbahn bekannt, die aus einer elastomermodifizierten Bitumenschicht besteht, die unterseitig mit einem Siliconpapier abgedeckt und die oberseitig mit einer dünnen Trägerfolie aus Polyethylen kaschiert ist. Zur Erhöhung der Festigkeit kann zwischen Trägerfolie und Bitumenschicht ein Glasfaservlies angeordnet sein, auf das die Trägerfolie aufgeschmolzen ist. Für Reparaturarbeiten an metallischen Dachkonstruktionen wird vorgeschlagen, die der Trägerfolie zugewandte Seite des Glasvlieses mit Aluminium zu beschichten oder zu bedampfen.

In der DE-A 28 40 814 werden Dachsteine beansprucht, die zum temporären Schutz gegen Moos- und Flechtenbewuchs Kupfer oder Kupferverbindungen enthalten. Insbesondere werden Kupferoxid und Kupfersulfat verwendet. Gediegenes Kupfer oxidiert ebenfalls an den Oberflächen der porösen Dachsteine, so daß im wäßrigen Medium Kupferionen wirksam werden können.

Die erfindungsgemäße Bahn kann als Dachbahn in üblicher Weise hergestellt werden, wobei das Fasergebilde zunächst getränkt und anschließend mit einer Deckmasse beschichtet wird, deren Oberflächen mit Talkum, Sand oder Granulat abgestreut werden. Die Oberfläche kann auch mit einer Folie, bzw. mit Vliesen abgedeckt sein. Die Bahn wird mit Heißklebemassen verlegt.

Die Bahn kann jedoch auch als Schweißbahn gefertigt oder kaltselbstklebend ausgerüstet sein. Der Deckmasse auf der Basis von Oxidationsbitumen oder Polymerbitumen können noch zusätzlich bekannte wurzelhemmende Stoffe zugegeben werden.

Statt der Abstreuung kann die Oberfläche der Bahn auch mit einer Folie kaschiert sein. Bei kaltselbstklebenden Massen ist dies eine Trennfolie, z. B. ein siliconisiertes Papier. Deckmassen mit hohem Polymeranteil brauchen weder abgestreut noch kaschiert zu werden. Alle diese besonderen Ausgestaltungen der erfindungsgemäßen Bahn sind dem Fachmann an sich bekannt und lassen sich auf üblichen Dachbahnenanlagen herstellen.

Die Menge des aufgedampften Kupfers beträgt 0,1 bis 100 g/m² vorzugsweise 0,1 bis 5 g/m². Bei einer geringeren Menge ist die Durchwurzelungsfestigkeit ohne Zusatz von wurzelhemmenden Stoffen in der Deckmasse nicht mehr gewährleistet. Größere Mengen haben einen negativen Einfluß auf die Flexibilität und die Dehnung.

Durch die beidseitige Beschichtung der Einlage wird die aufgedampfte Kupferbeschichtung geschützt. Sie befindet sich vorzugsweise auf der dem Bauwerk abgewandten Seite der Einlage. Bei einseitiger Beschichtung befindet sie sich auf der gleichen Seite wie die Deckmasse.

Bei Gründächern ist es üblich, zwischen der bituminösen Abdichtung und der Vegetations- bzw. Drainschicht eine Schutz- und Gleitschicht anzuordnen, die z. B. aus einem Geotextil bestehen kann und die bituminöse Abdichtung schützen soll. Hier ist die Verwendung der erfindungsgemäßen Bahn mit einseitiger bituminöser Beschichtung des flächigen Fasergebildes möglich. Dabei kann diese Wurzelschutzschicht sehr dünn ausgeführt sein, so daß sich bei den Überlappungsnähten nur eine dünne Kleberschicht zwischen den flächigen, mit Kupfer beschichteten Fasergebilden befindet. Eine Durchwurzelung solcher Nähte ist auch unter ungünstigen Bedingungen nicht möglich.

Bei der Herstellung einer solchen kaltselbstklebend ausgerüsteten Bahn wird die kaltselbstklebende, bituminöse Masse in einer Foliengießanlage auf das mit einer Trennfolie belegte Kühlband in einer Dicke von etwa 1 mm gegossen und mit einem ggf. mit Bitumen getränkten, kupferbedampften Vlies oder Gewebe so kaschiert, daß die kupferbedampfte Seite auf der bituminösen Masse liegt, und ggf. mit Sand oder Talkum abgestreut. Beim Verlegen wird die Trennfolie abgezogen und die Bahn auf die bituminöse Dachabdichtung geklebt, wobei die Nähte mit einer Überlappung von etwa 10 cm verklebt werden.

## Patentansprüche

1. Wurzelfeste, bituminöse Dichtungsbahn, **dadurch gekennzeichnet**, daß sie aus einem ein- oder beidseitig mit einer bituminösen Masse beschichtet, flächigen Fasergebilde besteht, wobei das Fasergebilde zumindest auf einer Oberfläche gleichmäßig mit 0,1 bis 100 g/m² Kupfer bedampft ist.

2. Dichtungsbahn nach Anspruch 1, **dadurch gekennzeichnet**, daß das Fasergebilde ein Flächengewicht von 50 bis 300 g/m² hat.

3. Dichtungsbahn nach Anspruch 1 oder 2, **dadurch gekennzeichnet**, daß die Menge des aufgedampften Kupfers 0,1 bis 5 g/m² beträgt.

4. Dichtungsbahn nach einem der Ansprüche 1 bis 3, **dadurch gekennzeichnet**, daß die mit Kupfer bedampfte Oberfläche des Fasergebildes bei den Bahnen mit beidseitigem Auftrag von bituminösen Massen sich auf der dem Bauwerk abgewandten Seiten des Fasergebildes befindet.

5. Dichtungsbahn nach einem der Ansprüche 1 bis 3, **dadurch gekennzeichnet**, daß die mit Kupfer bedampfte Oberfläche des Fasergebildes bei den Bahnen mit einseitigem Auftrag der bituminösen Masse sich auf der dieser Masse zugekehrten Seite des Fasergebildes befindet.

## Claims

1. Root-resistant, bituminous sealing web, characterized in that it comprises an areal fibre structure coated on one or both sides with a bituminous composition, the fibre structure being vapour-plated uniformly with 0.1 to 100 g/m² copper at least on one surface.

2. Sealing web according to claim 1, characterized in that the fibre structure has a weight by area of 50 to 300 g/m².

3. Sealing web according to claim 1 or 2, characterized in that the quantity of the vapour-plated copper is 0.1 to 5 g/m².

4. Sealing web according to one of claims 1 to 3, characterized in that the surface of the fibre structure vapour-plated with copper is located, in the case of webs with an application of the bituminous compositions on both sides, on the side of the fibre structure remote from the building.

5. Sealing web according to one of claims 1 to 3, characterized in that the surface of the fibre structure vapour-plated with copper is located, in the case of webs with an application of bituminous composition on one side, on the side of the fibre structure facing this composition.

## Revendications

1. Feuille d'étanchéité bitumineuse résistante au percement des racines, caractérisée en ce qu'elle est constituée par une structure fibreuse étendue revêtue d'une masse bitumineuse sur une ou deux faces, la structure fibreuse étant régulièrement recouverte de 0,1-100 g/m² cuivre vaporisé sur au moins une face.

2. Feuille d'étanchéité selon la revendication 1, caractérisée en ce que la structure fibreuse possède un poids surfacique de 50 à 300 g/m².

3. Feuille d'étanchéité selon la revendication 1 ou 2, caractérisée en ce que la quantité de cuivre déposé par vaporisation s'élève à 0,1-5 g/m².

4. Feuille d'étanchéité selon l'une des revendications 1 à 3, caractérisée en ce que, dans le cas de feuilles avec application de masses bitumineuses sur les deux faces, la surface de la structure fibreuse recouverte de cuivre par vaporisation se trouve sur la face de la structure fibreuse opposée à l'ouvrage.

5. Feuille d'étanchéité selon l'une des revendications 1 à 3, caractérisiée en ce que, dans le cas des feuilles avec application de la masse bitumineuse sur une face, la surface de structure fibreuse recouverte de cuivre par vaporisation se trouve sur la face de la structure fibreuse tournée vers cette masse.
